# FASCICULE DE BREVET EUROPEEN

(11) **EP 0 970 647 B1**
(45) Date de publication et mention de la délivrance du brevet: **14.05.2003**
(21) Numéro de dépôt: 99401469.4
(22) Date de dépôt: 15.06.1999
(51) Int. Cl.: A47J 27/022

(54) **Récipient de cuisson dont le fond est renforcé par une plaque et des gorges radiales**
Kochgeschirr mit einem mittels einer Platte und Rillen verstärkten Boden
Cooking pot with a bottom reinforced by a plate and radial grooves

(30) Priorité: 01.07.1998 FR 9808408
(43) Date de publication de la demande: 12.01.2000
(73) Titulaire: SEB S.A., 69130 Ecully (FR)
(72) Inventeur: Brasset, Jean-Francois, 74960 Cran Gevrier (FR)
(74) Mandataire: Keib, Gérard

(56) Documents cités:
- EP-A- 0 451 033
- EP-A- 0 534 202
- WO-A-96/06552
- FR-A- 2 693 093
- US-A- 5 711 290

## Description

La présente invention concerne un récipient de cuisson dont la déformation du fond est maîtrisée sous l'effet de la chaleur et des variations brutales de température qu'il subit en cours d'utilisation.

Les récipients de cuisson sont généralement réalisés à partir d'une feuille en aluminium emboutie.

Lors du chauffage, la surface du fond du récipient est exposée à une température nettement plus élevée que la jupe.

Il en résulte une différence de dilatation thermique se traduisant par un bombage du fond du récipient.

Pour éviter ce phénomène nuisible, on donne au fond du récipient une légère concavité, de sorte que lors du chauffage, ce fond ne deviennent pas convexe sous l'effet de la dilatation.

Cependant l'expérience montre qu'au bout d'un certain nombre de cycles répétés de chauffage et de refroidissement, la concavité du fond du récipient diminuait, puis devenait nulle et en fin de compte le fond devenait bombé ou convexe, le récipient devenant ainsi pratiquement inutilisable.

Ce résultat s'explique par les caractéristiques des matériaux utilisés pour la fabrication de l'aluminium.

En effet, au cours des cycles répétés de chauffage et de refroidissement, le domaine élastique est dépassé et il résulte une déformation irréversible.

Pour remédier à cet inconvénient, la demanderesse a décrit dans son brevet européen 0 648 459, un récipient de cuisson dont le fond comporte une plaque éventuellement composée de plusieurs éléments, centrée, ne recouvrant qu'une portion réduite de ce dernier, en un métal ou alliage ayant des caractéristiques mécaniques, thermiques et physiques différentes de celles du métal ou alliage de ladite feuille, cette plaque étant encastrée dans ladite feuille. Cet encastrement peut être partiel ou total.

Grâce à cette plaque encastrée dans la zone localisée du fond du récipient et ayant des propriétés mécaniques, thermiques et physiques différentes de celles du métal ou alliage constituant le reste du récipient, on empêche toute déformation convexe. irréversible du fond du récipient pendant un très grand nombre de cycles répétés de chauffage et de refroidissement.

Le but de la présente invention est de retarder encore davantage le moment où, après un très grand nombre de cycles répétés de chauffage et de refroidissement, la déformation du fond devient convexe.

Suivant l'invention, le récipient de cuisson est caractérisé en ce que la surface de ladite feuille comprise entre la périphérie de la plaque et le bord extérieur du fond comprend plusieurs gorges radiales.

Les essais ont montré que la présence simultanée sur le fond du récipient, d'une plaque encastrée et des gorges radiales, permettait de limiter la déformation du fond et ainsi de retarder le moment où cette déformation devient irréversible.

La Demanderesse avait déjà décrit dans son brevet européen 0 474 850 un récipient de cuisson dont le fond est muni de gorges radiales, non associées à une plaque encastrée.

La présence de ces gorges radiales est décrite dans le brevet ci-dessus comme limitant la déformation du fond du récipient. Cependant, ni l'enseignement du brevet européen ci-dessus, ni celui du brevet européen 0 648 459 ne permettaient de prévoir que la présence simultanée sur le fond du récipient d'une plaque encastrée et de gorges radiales procurait un effet de synergie, à savoir un effet anti-déformation supérieur à la somme des effets procurés par la plaque seule et par les gorges radiales seules.

De préférence, le récipient est réalisé à partir d'une feuille en aluminium et ladite plaque est en acier inoxydable.

De préférence également lesdites gorges radiales sont identiques et régulièrement réparties sur ladite surface.

D'autres particularités et avantages de l'invention apparaîtront encore dans la description ci-après.

Aux dessins annexés donnés à titre d'exemples non limitatifs :
- la figure 1 est une vue en plan d'un disque destiné à être embouti sous la forme d'un récipient selon l'invention ;
- la figure 2 est une vue en coupe du disque précité.

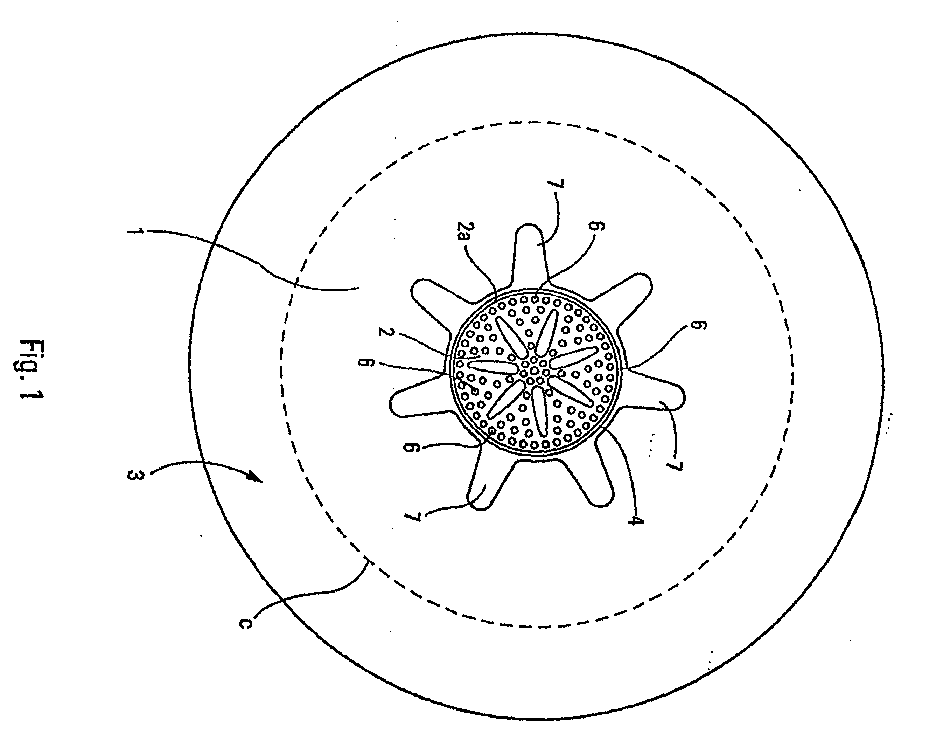

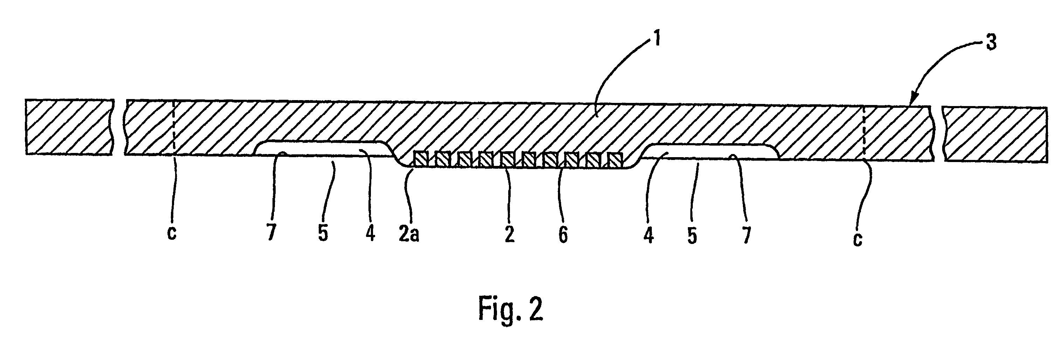

Sur les figures 1 et 2, on a représenté un disque découpé dans une feuille en métal ou alliage léger, tel que de l'aluminium. Ce disque est destiné à être embouti d'une manière bien connue par l'homme du métier, sous la forme d'un récipient de cuisson, tel qu'une poêle ou une casserole comportant un fond destiné à être disposé sur une plaque de cuisson ou un brûleur.

Sur la figure 1, on a délimité par un cercle en pointillé C la périphérie du fond 1 du récipient.

Comme également bien connu dans l'art, ce fond 1 est réalisé d'une manière légèrement concave lors de l'emboutissage du disque 3.

Le fond 1 comporte dans sa partie centrale, une plaque 2 en métal ou alliage ayant des propriétés différentes du métal ou alliage du disque 3.

La plaque 2 est comme on le voit sur la figure 2 encastrée dans le métal du fond 1 et la périphérie 2a de cette plaque 2 est adjacente à une gorge 4 ménagée dans ledit fond 1.

Après emboutissage du disque 3, la concavité du fond 1 est telle que lorsqu'il est disposé sur une plaque de cuisson, la circonférence de la surface 5 du fond située autour de la plaque 2, touche la plaque de cuisson, tandis que celle de la plaque 2 ne touche pas cette dernière.

De préférence, le disque 3 est en aluminium d'épaisseur comprise entre 2 et 6 mm.

La plaque 2 est de préférence en acier inoxydable.

Cette plaque 2 recouvre de préférence entre 5 et 40% de la surface du fond 1. En effet, cette proportion réduite du recouvrement du fond 1 par la plaque 2 assure les meilleurs résultats, tant en ce qui concerne la résistance et l'amplitude de la déformation du fond 1 sous l'effet de cycles répétés de chauffage et de refroidissement, qu'en ce qui concerne la transmission de la chaleur et la répartition de la température.

Ces résultats s'expliquent notamment par l'encastrement de la plaque 2 dans la zone centrale du fond du récipient et par les propriétés différentes de l'acier par rapport à celle de l'aluminium qui empêche que la déformation convexe du fond devienne irréversible sous l'effet de cycles répétés de chauffage et de refroidissement.

Dans la réalisation des figures 1 et 2, la plaque 2 présente des trous 6 par exemple circulaires, régulièrement espacés et répartis sur toute la surface de la plaque. Cette plaque 2 est encastrée dans le fond 1. Cette plaque 2 peut être encastrée au fond 1 par frappe à froid, comme décrit dans la demande de brevet européen 509 860 au nom de la Demanderesse.

De cette façon, la plaque 2 est solidement liée au fond 1 du récipient en un grand nombre de points et maîtrise toute déformation de ce fond 1 grâce à l'acier utilisé pour cette plaque.

Il suffit que la plaque 2 ait une épaisseur comprise entre 3/10^{e} et 6/10^{e} de mm (pour un fond en aluminium d'épaisseur comprise entre 2 et 6 mm). Son encastrement dans le fond 1 suivant une profondeur comprise entre la moitié de son épaisseur et l'épaisseur totale est suffisant pour obtenir d'excellents résultats.

Comme représenté sur la figure 1, la plaque 2 a la forme d'un disque. Toutefois, la plaque 2 pourrait avoir une forme polygonale, ou celle d'un anneau. La plaque 2 pourrait éventuellement être divisée en plusieurs secteurs ou être réalisée sous la forme d'un grillage.

Conformément à la présente invention, la surface du fond 1 comprise entre la plaque 2 et le bord extérieur C du fond comprend plusieurs gorges radiales 7 régulièrement réparties sur ce fond.

Dans l'exemple représenté sur la figure 1, l'extrémité des gorges radiales 7 adjacente à la plaque 2 est plus large que leur extrémité adjacente au bord extérieur C du fond 1.

Par ailleurs, l'extrémité des gorges radiales 7 adjacente à la plaque 2 débouche dans une gorge circulaire 4 qui entoure la plaque 2.

Le diamètre dans lequel s'inscrivent les gorges radiales 7 est compris dans une proportion de 40 à 60% du diamètre du fond.

La profondeur des gorges radiales 7 est comprise entre 0,3 et 1 mm.

La fixation de la plaque 2 sur le disque en aluminium et la réalisation des gorges radiales 7 peuvent être réalisées en une opération unique de frappe à froid.

On donne ci-après les résultats d'essais comparatifs entre deux poêles, l'une étant classique et l'autre réalisée conformément à l'invention.

Les deux poêles étaient de dimensions identiques et réalisées à partir d'un disque en aluminium d'épaisseur égale à 3,4 mm.

La poêle conforme à l'invention présentait sur son fond un disque en acier inoxydable d'épaisseur égale à 0,5 mm et de diamètre égal à 75 mm.

Ces deux poêles ont subi des cycles répétés de chauffages et de refroidissements brusques (chauffage à 250°C puis refroidissement à l'eau du robinet à environ 20°C).

Une déformation irréversible du fond de la poêle classique a été constatée après 30 cycles ci-dessus.

Dans le cas de la poêle selon l'invention, une déformation du fond a été constatée seulement au bout d'environ 500 cycles répétés de chauffages et de refroidissements.

Bien entendu, l'invention n'est pas limitée aux exemples que l'on vient de décrire et on peut apporter à ceux-ci de nombreuses modifications sans sortir du cadre de l'invention.

Ainsi, la plaque 2 peut avoir une forme quelconque et elle peut ne pas être centrée sur le fond du récipient.

Cette plaque peut être par exemple en forme d'étoile avec un nombre quelconque de branches. La forme de la plaque peut être dissymétrique et peut présenter par exemple une branche s'étendant dans une direction par exemple la direction de la queue du récipient.

La forme, la longueur, la profondeur des gorges radiales peuvent être différentes.

## Revendications

1. Récipient de cuisson réalisé à partir d'une feuille (3) de métal ou d'alliage léger emboutie, comportant un fond (1) destiné à être disposé sur une plaque de cuisson, un brûleur ou analogue, ce fond (1) étant légèrement concave, ledit fond (1) comportant une plaque (2), éventuellement composée de plusieurs éléments, en un métal ou alliage ayant des propriétés mécaniques, thermiques, physiques différentes de celles du métal ou alliage de ladite feuille (3), cette plaque (2) étant encastrée dans ladite feuille (3) et ne recouvrant qu'une portion centrale réduite du fond (1), **caractérisé en ce que** la surface de ladite feuille (3) comprise entre la périphérie (2a) de la plaque (2) et le bord extérieur (C) du fond (1) comprend plusieurs gorges radiales (7).

2. Récipient de cuisson conforme à la revendication 1, **caractérisé en ce qu'**il est réalisé à partir d'une feuille (3) en aluminium et ladite plaque (2) est en acier inoxydable.

3. Récipient de cuisson conforme à l'une des revendications 1 ou 2, **caractérisé en ce que** lesdites gorges radiales (7) sont identiques et régulièrement réparties sur ladite surface.

4. Récipient de cuisson conforme à l'une des revendications 1 à 3, **caractérisé en ce que** lesdites gorges radiales (7) sont de longueur et de profondeur variables suivant le diamètre du fond (C) de l'article.

5. Récipient de cuisson conforme à l'une des revendications 1 à 3, **caractérisé en ce que** l'extrémité des gorges radiales (7) adjacente à la plaque (2) est plus large que leur extrémité adjacente au bord extérieur (C) du fond (1).

6. Récipient de cuisson conforme à l'une des revendications 1 à 4, **caractérisé en ce que** l'extrémité des gorges radiales (7) adjacente à la plaque (2) débouche dans une gorge circulaire (4) qui entoure la plaque (2).

7. Récipient de cuisson conforme à l'une des revendications 1 à 4, **caractérisé en ce que** la plaque 2 présente des découpes adaptées.

## Claims

1. A cooking receptacle made from a stamped sheet (3) of metal or light alloy, comprising a base (1) intended to be disposed on a hotplate, a burner or the like, said base (1) being slightly concave and comprising a plate (2), which may be made up of a plurality of elements, of a metal or alloy having mechanical, thermal and physical properties different from those of the metal or alloy of the said sheet (3), said plate (2) being embedded in said sheet (3) and covering only a reduced central portion of the base (1), **characterised in that** the surface of the said sheet (3) contained between the periphery (2a) of the plate (2) and the outer edge (C) of the base (1) comprises a plurality of radial grooves (7).

2. A cooking receptacle according to claim 1, **characterised in that** it is made from a sheet (3) of aluminium and the said plate (2) is of stainless steel.

3. A cooking receptacle according to claim 1 or 2, **characterised in that** the said radial grooves (7) are identical and uniformly distributed over the said surface.

4. A cooking receptacle according to any one of claims 1 to 3, **characterised in that** the said radial grooves (7) are of varying length and depth along the diameter of the base (C) of the article.

5. A cooking receptacle according to any one of claims 1 to 3, **characterised in that** the end of the radial grooves (7) adjacent the plate (2) is wider than their end adjacent the outer edge (C) of the base (1).

6. A cooking receptacle according to any one of claims 1 to 4, **characterised in that** the end of the radial grooves (7) adjacent the plate (2) leads into a circular groove (4) surrounding the plate (2).

7. A cooking receptacle according to any one of claims 1 to 4, **characterised in that** the plate (2) has adapted cut-outs.

## Patentansprüche

1. Kochbehälter, der aus einer getriebenen Metall- oder Leichtmetalllegierungstafel (3) hergestellt ist und einen Boden (1) aufweist, der dazu bestimmt ist, auf eine Kochplatte, einen Brenner oder dergleichen gestellt zu werden, wobei dieser Boden (1) leicht konkav ist und eine Platte (2) enthält, die eventuell mehrere Elemente umfasst und die aus einem Metall oder einer Legierung mit anderen mechanischen, thermischen, physikalischen Eigenschaften als denjenigen des Metalls oder der Legierung der genannten Tafel (3) besteht, wobei diese Platte (2) in diese Tafel (3) eingesetzt ist und nur einen geringen zentralen Teil des Bodens (1) abdeckt, **dadurch gekennzeichnet, dass** die Oberfläche dieser Tafel (3), die sich zwischen der Außenumfangslinie (2a) der Platte (2) und dem Außenrand (C) des Bodens (1) erstreckt, mehrere radiale Rillen (7) aufweist.

2. Kochbehälter nach Anspruch 1, **dadurch gekennzeichnet, dass** er aus einer Aluminiumtafel (3) hergestellt ist und die Platte (2) aus rostfreiem Stahl besteht.

3. Kochbehälter einem der Ansprüche 1 oder 2, **dadurch gekennzeichnet, dass** die genannten radialen Rillen (7) gleich sind und gleichmäßig über diese Oberfläche verteilt sind.

4. Kochbehälter nach einem der Ansprüche 1 bis 3, **dadurch gekennzeichnet, dass** die genannten radialen Rillen (7) in Länge und Tiefe variabel sind, je nach Durchmesser des Bodens (1) des Behälters.

5. Kochbehälter nach einem der Ansprüche 1 bis 3, **dadurch gekennzeichnet, dass** das an die Platte (2) angrenzende Ende der radialen Rillen (7) breiter ist als ihr an den Außenrand (C) des Bodens (1) angrenzendes Ende.

6. Kochbehälter nach einem der Ansprüche 1 bis 4, **dadurch gekennzeichnet, dass** das an die Platte (2) angrenzende Ende der radialen Rillen (7) in eine kreisförmige Rille (4) mündet, die um die Platte (2) herum verläuft.

7. Kochbehälter nach einem der Ansprüche 1 bis 4, **dadurch gekennzeichnet, dass** die Platte (2) passende Ausschnitte aufweist.
